# EUROPÄISCHE PATENTSCHRIFT

(11) **EP 1 633 027 B1**
(45) Veröffentlichungstag und Bekanntmachung des Hinweises auf die Patenterteilung: **10.01.2007**
(21) Anmeldenummer: 05012615.0
(22) Anmeldetag: 13.06.2005
(51) Int. Cl.: H02G 3/12, H01R 24/16, F16B 39/24, H01R 103/00

(54) **Elektrisches Installationsgerät**
Electrical installation apparatus
Appareil d'installation électrique

(30) Priorität: 07.09.2004 DE 102004043091
(43) Veröffentlichungstag der Anmeldung: 08.03.2006
(73) Patentinhaber: Albrecht Jung GmbH & Co. KG, 58579 Schalksmühle (DE)
(72) Erfinder: Rodemann, Burkhard, 58579 Schalksmühle (DE); Kandt, Richard, 44803 Bochum (DE)

(56) Entgegenhaltungen:
- EP-A- 0 863 582
- DE-A1- 3 909 236
- DE-A1- 10 013 032

## Beschreibung

Die vorliegende Erfindung geht von einem gemäß dem Oberbegriff des Hauptanspruches konzipierten elektrischen Installationsgerät aus.

Derartige elektrische Installationsgeräte weisen in der Regel einen mit einem Gehäuseteil versehenden Funktionseinsatz und eine als weiteres Gehäuseteil zu bezeichnende entsprechend ausgeführte Funktionsabdeckung auf.

Ein dem Oberbegriff des Hauptanspruches entsprechendes elektrisches Installationsgerät ist durch die DE 100 13 032 C2 bekannt geworden. Bei diesem elektrischen Installationsgerät wird ein erstes Gehäuseteil über eine Schraubverbindung an ein zweites Gehäuseteil angeschraubt. Dabei sind die als Schrauben ausgeführten Befestigungselemente solcher Schraubverbindungen oftmals durch scheibenförmige Sicherungselemente unverlierbar in der Schraubenaufnahme des ersten Gehäuseteiles drehbar gehalten. Durch fertigungsbedingte und sich am Einbauort (Unterputzinstallation) ergebende Toleranzen ergibt es sich oftmals, dass die beiden miteinander zu verschraubenden Gehäuseteile nicht direkt aneinander zur Anlage kommen. Wird in einem solchen Fall die Schraubverbindung zu fest angezogen, kann es leicht zu Verformungen bzw. zu Beschädigungen an dem ersten und/oder dem zweiten Gehäuseteil kommen.

Der vorliegenden Erfindung liegt deshalb die Aufgabe zugrunde ein elektrisches Installationsgerät zu schaffen, welches auf einfache und geschickte Art und Weise fertigungs- bzw. einbauortbedingte Toleranzen ausgleicht, so dass das erste und das weitere Gehäuseteil am Ende des Verbindungsvorganges unter Zwischenschaltung des Sicherungselementes spannungsfrei aneinander zur Anlage kommen.

Diese Aufgabe wird durch die im kennzeichnenden Teil des Hauptanspruches angegebenen Merkmale gelöst. Bei einem solchermaßen ausgebildeten elektrischen Installationsgerät ist besonders vorteilhaft, dass die spannungsfreie Zuordnung des ersten Gehäuseteiles zum zweiten Gehäuseteil automatisch während der Herstellung der Befestigungsverbindung erfolgt.

Weitere vorteilhafte Ausgestaltungen sind in den Unteransprüchen angegeben und werden anhand eines prinziphaft in der Zeichnung dargestellten Ausführungsbeispiel des erfindungsgemäßen Gegenstandes näher erläutert. Dabei zeigen:
- Fig. 1:: prinziphaft ein erstes Ausführungsbeispiel in Explosionsdarstellung;
- Fig. 2:: prinziphaft ein fertig montiertes elektrisches Installationsgerät gemäß Fig. 1;
- Fig. 3:: prinziphaft das Sicherungselement mit Wirkfläche in Zuordnung zur Gegenfläche des ersten Gehäuseteiles gemäß erstem Ausführungsbeispiel in vergrößerter Darstellung;
- Fig. 4:: prinziphaft das Sicherungselement mit Wirkfläche in Zuordnung zur Gegenfläche des ersten Gehäuseteiles gemäß zweitem Ausführungsbeispiel in vergrößerter Darstellung.

Wie aus den Figuren hervorgeht, besteht ein solches elektrisches Installationsgerät im Wesentlichen aus einem ersten Gehäuseteil 1, welches über ein als Schraube ausgebildetes Befestigungselement 2 unter Zwischenschaltung eines Sicherungselementes 3 mit einem weiteren Gehäuseteil 4 verbunden werden kann.

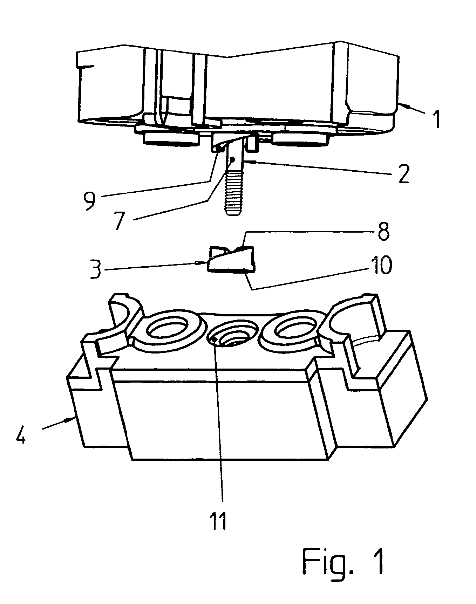

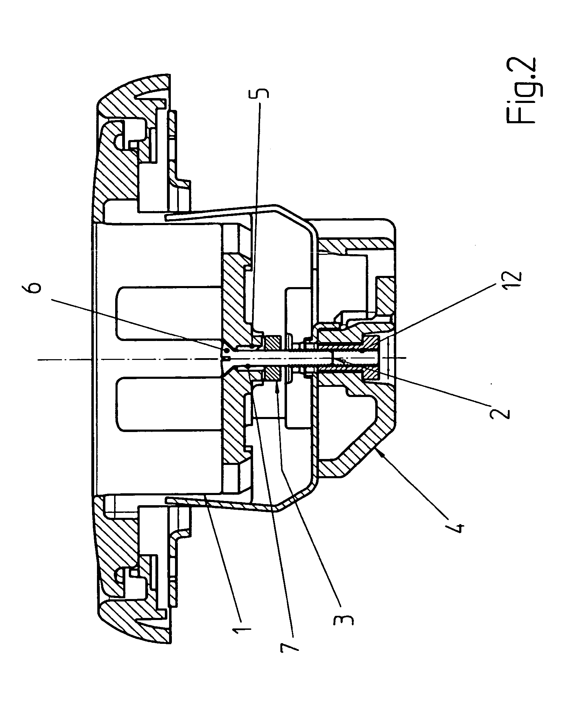

Wie insbesondere aus Fig. 1, Fig. 2 und Fig. 3 hervorgeht ist das als Schraube ausgebildete Befestigungselement 2 drehbeweglich in einer Schraubenaufnahme 5 des ersten Gehäuseteiles 1 gehalten, wobei der Schraubenkopf 6 von der Oberseite des ersten Gehäuseteiles 1 zugänglich ist. Den Schaft 7 ringförmig umgebend ist an der Unterseite des ersten Gehäuseteiles 1 ein mit der zugeordneten ersten Wirkfläche 8 des Sicherungselementes 3 in Anlage kommende Gegenfläche 9 angeformt, die schraubenflächenartig ausgebildet ist. Die zugeordnete erste Wirkfläche 8 des Sicherungselementes 3 ist ebenfalls schraubenflächenartig ausgebildet, wohingegen die zweite Wirkfläche 10 des Sicherungselementes 3 und die zugeordnete Gegenfläche 11 des weiteren Gehäuseteiles 4 jeweils als glatte Ringflächen ausgeführt sind. In Bezug auf die Erstreckungsrichtung der Schraube sind sowohl die Wirkflächen 8, 10 des Sicherungselementes 3, als auch die Gegenflächen 9, 11 des ersten Gehäuseteiles 1 und des weiteren Gehäuseteiles 4 rechtwinkelig verlaufend angeordnet.

Um einen für die korrekte Funktion weitestgehend drehfesten Sitz des ringförmigen Sicherungselementes 3 auf dem Schaft 7 der Schraube zu gewährleisten, besteht zwischen dem Schaft 7 und der Durchtrittsöffnung des Sicherungselementes 3 eine Presspassung. Die Presspassung ist als leichte Presspassung ausgeführt, so dass beim Einwirken von Drehkräften bestimmter Größenordnungen ein Verdrehen des Sicherungselementes 3 auf dem Schaft 7 möglich ist. Um eine sichere Verbindung des ersten Gehäuseteiles 1 und des weiteren Gehäuseteiles 4 zu gewährleisten, befindet sich unterhalb der Gegenfläche 11 des weiteren Gehäuseteiles 4 ein auf das als Schraube ausgebildete Befestigungselement 2 abgestimmtes, eingeformtes Gewindegegenstück 12.

Beim Herstellen der Schraubverbindung kommt zunächst die zweite Wirkfläche 10 des Sicherungselementes 3 an der zugehörigen Gegenfläche 11 des weiteren Gehäuseteiles 4 zur Anlage. Dann wird die erste Wirkfläche 8 des Sicherungselementes 3 mehr und mehr der Gegenfläche 9 des ersten Gehäuseteiles 1 zugeordnet. Letztendlich kommen geringe Flächenanteile der ersten Wirkfläche 8 an geringe Flächenanteile der Gegenfläche 9 zur Anlage und bei Drehung der Schraube gleicht die schraubenflächenartige Wirkflächen 8 im Zusammenspiel mit der schraubenflächenartigen Gegenfläche 9 die Distanz zwischen dem ersten Gehäuseteil 1 und dem weiteren Gehäuseteil 4 aus. Wird jetzt durch Drehung der Schraube die Schraubverbindung weiter festgezogen, um einen sicheren Sitz der beiden Gehäuseteile 1, 4 zu gewährleisten, verspannt sich das Sicherungselement 3 gegen die Gegenfläche 9 und gleicht damit sowohl Fertigungstoleranzen der beiden Gehäuseteile 1, 4 als auch dem Einbauort zuzurechnende Einbautoleranzen (Tapetenausgleich, Putzausgleich usw.) automatisch aus. Das erste Gehäuseteil 1 wird somit über die Schraubverbindung spannungsfrei dem weiteren Gehäuseteil 4 zugeordnet, so dass es auch bei größeren Toleranzen nicht zu Beschädigungen an einem der beiden Gehäuseteile 1, 4, bedingt durch das Festziehen der Schraubverbindung kommt.

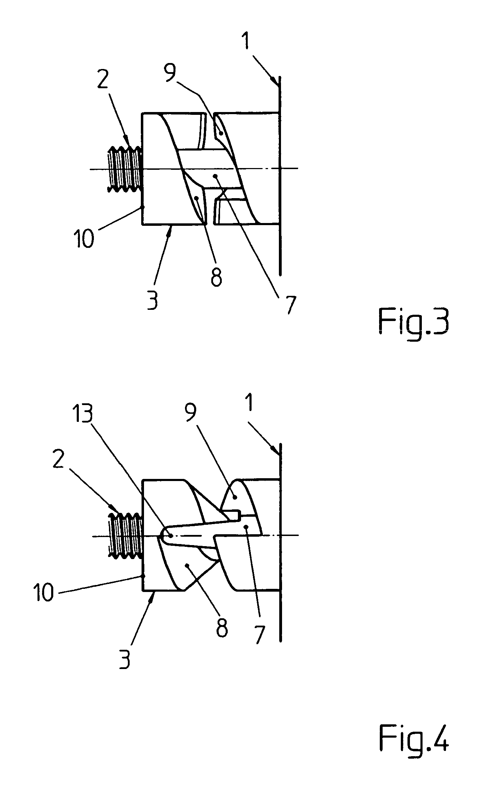

Wie insbesondere aus Fig. 4 hervorgeht, weist das Sicherungselement 3 eine in Bezug auf die Erstreckungsrichtung des als Schraube ausgebildeten Befestigungselementes 2 gekippt (ca. 45°) angeordnete Wirkfläche 8 auf, die einer entsprechend gekippt (ca. 45°) angeordneter Gegenfläche 9 des ersten Gehäuseteiles 1 zugeordnet ist. Die zweite Wirkfläche 10 des Sicherungselementes 3 und die zugeordnete Gegenfläche 11 des weiteren Gehäuseteiles 4 sind jeweils als glatte Ringflächen ausgeführt. Das Sicherungselement 3 weist zwei in Erstreckungsrichtung der Schraube verlaufende Schlitze 13 auf. Die Schlitze 13 bewirken, dass das Sicherungselement 3 mit zunehmendem Festziehen des als Schraube ausgebildeten Befestigungselementes 2 mehr und mehr an den Schaft 7 angepresst wird.. Das Einstellen der notwendigen Presspassung zwischen dem Sicherungselement 3 und dem Schaft 7 wird somit stark erleichtert. Im übrigen gilt das was vorstehend bereits zu Fig. 1, Fig. 2 und Fig. 3 ausgeführt wurde.

Selbstverständlich kann die Schraube auch durch ein andersartig ausgebildetes drehbares Befestigungselement 2, wie z. B. den Schnellbefestigungsstift eines Bajonettverschlusses ersetzt werden, ohne dass der erfinderische Gedanke verlassen wird.

## Patentansprüche

1. Elektrisches Installationsgerät mit einem ersten Gehäuseteil (1) an dem ein Befestigungselement durch ein scheibenförmiges Sicherungselement (3) unverlierbar in einer Aufnahme (5) drehbeweglich gehalten ist, wobei das erste Gehäuseteil (1) über das Befestigungselement mit zumindest einem weiteren Gehäuseteil (1) verbindbar ist, welches ein entsprechendes Befestigungsgegenstück (12) aufweist, d**adurch gekennzeichnet, dass** das Sicherungselement (3) am Schaft (7) des Befestigungselementes (2) gehalten, und dass zumindest eine seiner beiden gegenüberliegend vorhandenen Wirkflächen (8, 10) schraubenflächenartig ausgeführt ist, und dass zumindest eine zugeordnete Gegenfläche (9, 11) des ersten Gehäuseteiles (1) und/oder des weiteren Gehäuseteiles (4) ebenfalls eine schraubenflächenartige Ausbildung aufweist.

2. Elektrisches Installationsgerät nach Anspruch 1, **dadurch gekennzeichnet, dass** beide gegenüberliegend vorhandenen Wirkflächen (8, 10) des Sicherungselementes (3) schraubenflächenartig ausgeführt sind, und dass sowohl die zugeordnete Gegenfläche (9) des ersten Gehäuseteiles (1) als auch die zugeordnete Gegenfläche (11) des weiteren Gehäuseteiles (4) ebenfalls schraubenflächenartig ausgebildet sind.

3. Elektrisches Installationsgerät nach einem der Ansprüche 1 oder 2, **dadurch gekennzeichnet, dass** das Sicherungselement (3) zumindest eine in Bezug auf die Erstreckungsrichtung des Befestigungselementes (2), im Winkel von 90° angeordnete Wirkfläche (8, 10) aufweist.

4. Elektrisches Installationsgerät nach einem der Ansprüche 1 bis 3, **dadurch gekennzeichnet, dass** das Sicherungselement (3) zumindest eine in Bezug auf die Erstreckungsrichtung des Befestigungselementes (2) gekippt angeordnete Wirkfläche (8, 10) aufweist, und dass die zugeordnete Gegenfläche (9, 11) des ersten Gehäuseteiles (1) und/oder des weiteren Gehäuseteiles (4) entsprechend gekippt ausgeführt ist.

5. Elektrisches Installationsgerät nach einem der Ansprüche 1 bis 4, **dadurch gekennzeichnet, dass** das Sicherungselement (3) zumindest einen in Erstreckungsrichtung des Befestigungselementes (2) verlaufenden Schlitz (13) aufweist.

6. Elektrisches Installationsgerät nach einem der Ansprüche 1 bis 5, **dadurch gekennzeichnet, dass** das Sicherungselement (3) drehfest am Schaft (7) des Befestigungselementes (2) gehalten ist.

7. Elektrisches Installationsgerät nach einem der Ansprüche 1 bis 6, **dadurch gekennzeichnet, dass** das erste Gehäuseteil (1) als Zentralplatte und das weitere Gehäuseteil (4) als Sockel einer Schutzkontaktsteckdose ausgebildet ist.

8. Elektrisches Installationsgerät nach einem der Ansprüche 1 bis 6, **dadurch gekennzeichnet, dass** das erste Gehäuseteil (1) Bestandteil eines Funktionseinsatzes, und dass das weitere Gehäuseteil (4) als entsprechende Funktionsabdeckung ausgebildet ist.

9. Elektrisches Installationsgerät nach einem der Ansprüche 1 bis 8, **dadurch gekennzeichnet, dass** das Befestigungselement (2) als Schraube ausgeführt ist.

10. Elektrisches Installationsgerät nach einem der Ansprüche 1 bis 8, **dadurch gekennzeichnet, dass** das Befestigungselement (2) als Schnellbefestigungsstift eines Bajonettverschlusses ausgeführt ist.

## Claims

1. Electrical installation accessory with a first housing constituent (1) on which a fastening element is held captive in a receptacle (5) in a rotatable manner by a disk-shaped securing element (3), with the first housing constituent (1) capable of being connected by means of the fastening element to at least one other housing constituent (4) that is provided with a corresponding fastening counterpart (12), **characterised by** the fact that the securing element (3) is held on the shank (7) of the fastening element (2) and that at least one of its two active surfaces (8, 10), provided opposing each other, is of a helicoid-like design and that at least one allocated opposing surface (9, 11) of the first housing constituent (1) and/or the further housing constituent (4) likewise shows a helicoid-like configuration.

2. Electrical installation accessory according to Claim 1, **characterised by** the fact that both opposing active surfaces (8, 10) of the securing element are of a helicoid-like design and that the allocated opposing surface (9) of the first housing constituent (1) as well as the allocated opposing surface (11) of the further housing constituent (4) are likewise of a helicoid-like design.

3. Electrical installation accessory in accordance with Claim 1 or Claim 2, **characterised by** the fact that the securing element (3) shows at least one active surface (8, 10) arranged at an angle of 90° in relation to the direction of extension of the fastening element (2).

4. Electrical installation accessory in accordance with any of Claims 1 to 3, **characterised by** the fact that the securing element (3) shows at least one active surface (8, 10) which is arranged at a tilt in relation to the direction of extension of the fastening element (3) and that the allocated opposing surface (9, 11) of the first housing constituent (1) and/or of the further housing constituent (4) is of a correspondingly tilted design.

5. Electrical installation accessory in accordance with any of Claims 1 to 4, **characterised by** the fact that the securing element (3) shows at least one slot (13) stretching in the direction of extension of the fastening element (2).

6. Electrical installation accessory in accordance with any of Claims 1 to 5, **characterised by** the fact that the securing element (3) is held in a torque-proof manner on the shank (7) of the fastening element (2).

7. Electrical installation accessory in accordance with any of Claims 1 to 6, **characterised by** the fact that the first housing constituent (1) is designed as a central plate and the further housing constituent (4) as the base of a socket outlet with earthing contact.

8. Electrical installation accessory in accordance with any of Claims 1 to 6, **characterised by** the fact that the first housing constituent (1) is a component of a functional insert and that the further housing constituent (4) is designed as a corresponding functional cover.

9. Electrical installation accessory in accordance with any of Claims 1 to 8, **characterised by** the fact that the fastening element (2) is designed as a screw.

10. Electrical installation accessory in accordance with any of Claims 1 to 8, **characterised by** the fact that the fastening element (2) is designed as the quick-fixing pin of a bayonet catch.

## Revendications

1. Appareil d'installation électrique avec une première partie de boîtier (1) sur laquelle un élément de fixation est maintenu par un élément de sécurité en forme de disque (3), de manière à pouvoir tourner, sans risque de se perdre dans un logement (5), la première partie de boîtier (1) pouvant être reliée par l'élément de fixation à au moins une autre partie de boîtier (4) qui présente une contre-pièce de fixation correspondante (12), **caractérisé en ce que** l'élément de sécurité (3) est maintenu sur la tige (7) de l'élément de fixation (2) et qu'au moins l'une de ses deux surfaces actives en vis à vis (8, 10) est exécutée à surface de type hélicoïdal et qu'au moins une contre-surface correspondante (9, 11) de la première partie de boîtier (1) et/ou de l'autre partie de boîtier (4) présentent également une configuration à surface de type hélicoïdal.

2. Appareil d'installation électrique selon la revendication 1, **caractérisé en ce que** les deux surfaces actives existantes en vis à vis (8, 10) de l'élément de sécurité (3) sont exécutées à surface de type hélicoïdal, et que la contre-surface correspondante (9) de la première partie de boîtier (1) de même que la contre-surface correspondante (11) de l'autre partie de boîtier (4) présentent également une configuration à surface de type hélicoïdal.

3. Appareil d'installation électrique selon l'une des revendications 1 ou 2, **caractérisé en ce que** l'élément de sécurité (3) présente au moins une surface active (8, 10) formant un angle de 90° par rapport à la direction de projection de l'élément de fixation (2).

4. Appareil d'installation électrique selon l'une des revendications 1 à 3, **caractérisé en ce que** l'élément de sécurité (3) présente au moins une surface active (8, 10) disposée en basculé par rapport à la direction de projection de l'élément de fixation (2) et que la contre-surface correspondante (9, 11) de la première partie de boîtier (1) et/ou de l'autre partie de boîtier (4) est excutée en basculé en conséquence.

5. Appareil d'installation électrique selon l'une des revendications 1 à 4, **caractérisé en ce que** l'élément de sécurité (3) présente au moins une fente (13) se déroulant dans la direction de projection de l'élément de fixation (2).

6. Appareil d'installation électrique selon l'une des revendications 1 à 5, **caractérisé en ce que** l'élément de sécurité (3) est maintenu sans pouvoir tourner sur la tige (7) de l'élément de fixation (2).

7. Appareil d'installation électrique selon l'une des revendications 1 à 6, **caractérisé en ce que** la première partie de boîtier (1) est configurée comme plaque centrale et l'autre partie de boîtier (4) comme socle d'une prise de courant de sécurité.

8. Appareil d'installation électrique selon l'une des revendications 1 à 6, **caractérisé en ce que** la première partie de boîtier (1) fait partie intégrante d'un insert fonctionnel et que l'autre partie de boîtier (4) est configurée comme recouvrement fonctionnel correspondant.

9. Appareil d'installation électrique selon l'une des revendications 1 à 8, **caractérisé en ce que** l'élément de fixation (2) est exécuté comme une vis.

10. Appareil d'installation électrique selon l'une des revendications 1 à 8, **caractérisé en ce que** l'élément de fixation (2) est exécuté comme une broche de fixation rapide d'un emboîtement à baïonnette.
